Europäisches Patentamt

European Patent Office

Office européen des brevets

(11) Publication number: **0 426 163 A1**

# EUROPEAN PATENT APPLICATION

(21) Application number: 90120926.2

(22) Date of filing: 31.10.90

(51) Int. Cl.5: **G07C  9/00, G06K 7/10**

(30) Priority: 01.11.89 JP 282878/89

(43) Date of publication of application:
08.05.91 Bulletin  91/19

(84) Designated Contracting States:
**DE FR GB IT NL**

(71) Applicant: **KABUSHIKI KAISHA TOSHIBA**
**72, Horikawa-cho Saiwai-ku**
**Kawasaki-shi Kanagawa-ken 210(JP)**

(72) Inventor: **Yokota, Yukio, c/o Intellectual**
**Property Div.**
**Kabushiki Kaisha Toshiba, 1-1 Shibaura**
**1-chome**
**Minato-ku, Tokyo 105(JP)**

(74) Representative: **Blumbach Weser Bergen**
**Kramer Zwirner Hoffmann Patentanwälte**
**Radeckestrasse 43**
**W-8000 München 60(DE)**

(54) **Portable type information storing device and information processing device using the same.**

(57) An electrochromic device is mounted on an IC card (4) as a nonvolatile display unit (4a) and the balance stored in the memory (41) of the IC card (4) is displayed on the nonvolatile display unit (4a). The display content is updated according to the contents of the memory (41) each time the card (4) is used for payment.

F I G.  1

## PORTABLE TYPE INFORMATION STORING DEVICE AND INFORMATION PROCESSING DEVICE USING THE SAME

This invention relates to a portable type information storing medium such as an IC card in which an IC chip (integrated circuit chip) having an information memory and a control unit such as a CPU is mounted and an information processing device used in association with the portable type information storing medium.

Recently, an IC card having a nonvolatile data memory used as information storing unit and a control unit such as a CPU (central processing unit) mounted therein has been developed. As is disclosed in Japanese Patent Disclosure No. 63-80384, for example, with this type of IC card, information is permitted to be transferred between the control unit thereof and an external device by connecting the control unit to the external device by means of a connector portion or transmitting and receiving the data via a wireless transmission device, and the information memory is accessed by the control unit so as to permit necessary information to be input or output according to a request from the external device.

When this type of IC card has received external shock or is bent and if the internal wiring or internal circuit is broken, it becomes impossible to read out the stored contents from the information memory, thereby making it impossible to check the stored contents of the information memory.

An object of this invention is to provide a portable type information storing medium which can permit the stored contents of information storing unit to be visually checked even when the stored contents of the information storing unit cannot be read out, so that it may become possible to solve the above problem that the stored contents of the information storing unit cannot be confirmed when the stored contents of the information storing unit cannot be read out, and an information processing device using the above portable type storing medium.

According to a first aspect of this invention, the portable type storing medium comprises an information storing unit for storing information; an information control unit for effecting a read/write operation with respect to the information storing unit; and a nonvolatile display unit for displaying information stored in the information storing unit by means of the information control unit.

According to a second aspect of this invention, an information processing device to be used in association with a portable type information storing medium having an information transmission/reception unit for transmitting and receiving information and a nonvolatile display unit for displaying information received by the information transmission/reception unit, comprises a signal processing unit for receiving information from the information transmission/reception unit of the portable type information storing medium, subjecting the received information to a predetermined operation process and transmitting resultant information derived based on the result of the operation process to the information transmission/reception unit of the portable type information storing medium, so as to display the resultant information on the nonvolatile display unit.

According to a third aspect of this invention, an information processing device to be used in association with a portable type information storing medium having a wireless information transmission/reception unit for transmitting and receiving information and a nonvolatile display unit for displaying the information received by the wireless information transmission/reception unit, comprises a wireless signal processing unit for receiving the information from the wireless information transmission/reception unit of the portable type information storing medium, subjecting the received information to a predetermined operation process and transmitting resultant information derived based on the result of the operation process to the wireless information transmission/reception unit of the portable type information storing medium, thereby displaying the resultant information on the nonvolatile display unit.

According to a fourth aspect of this invention, an information processing device to be used in association with a portable type information storing medium having a nonvolatile display unit for receiving information and displaying the received information, comprises a signal processing unit for effecting a predetermined operation process and transmitting resultant information derived based on the result of the operation process to the portable type information storing medium, thereby displaying the resultant information on the nonvolatile display unit.

In the first aspect of this invention, information is read out from or written into the information storing unit by means of the information control unit and information stored into the information storing unit by the information control unit is visually displayed by the nonvolatile display unit.

In the second aspect of this invention, information from the information transmission/reception unit of the portable type information storing medium having the information transmission/reception unit for transmitting and receiving information and the nonvolatile display unit for displaying information received by the information transmission/reception unit is received, the received information is subjected to a predetermined operation process and resultant information derived based on the result of the operation process is transmitted to the information transmission/reception unit of the portable type information storing medium, the resultant information being displayed on the non-volatile display unit.

In the third aspect of this invention, information from the wireless information transmission/reception unit of the portable type information storing medium having the information transmission/reception unit for transmitting and receiving information and a nonvolatile display unit for displaying the information received by the wireless information transmission/reception unit is received, the received information is subjected to the prescribed operation process and resultant information derived based on the result of the operation process is transmitted to the wireless information transmission/reception unit of the portable type information storing medium.

In the fourth aspect of this invention, resultant information derived based on the result of the predetermined operation process is transmitted to the portable type information storing medium having the nonvolatile display unit for receiving information and displaying the received resultant information.

This invention can be more fully understood from the following detailed description when taken in conjunction with the accompanying drawings, in which:

Fig. 1 is a block diagram showing one embodiment of this invention;

Fig. 2 is a block diagram of an IC card treating system;

Fig. 3 is a perspective view of an IC card shown in Fig. 1;

Fig. 4 is a block diagram of a nonvolatile display unit shown in Fig. 1; and

Figs. 5 and 6 are flowcharts for illustrating the operation of the embodiment of this invention shown in Figs. 1 to 4.

There will now be described an embodiment of this invention with reference to the accompanying drawings.

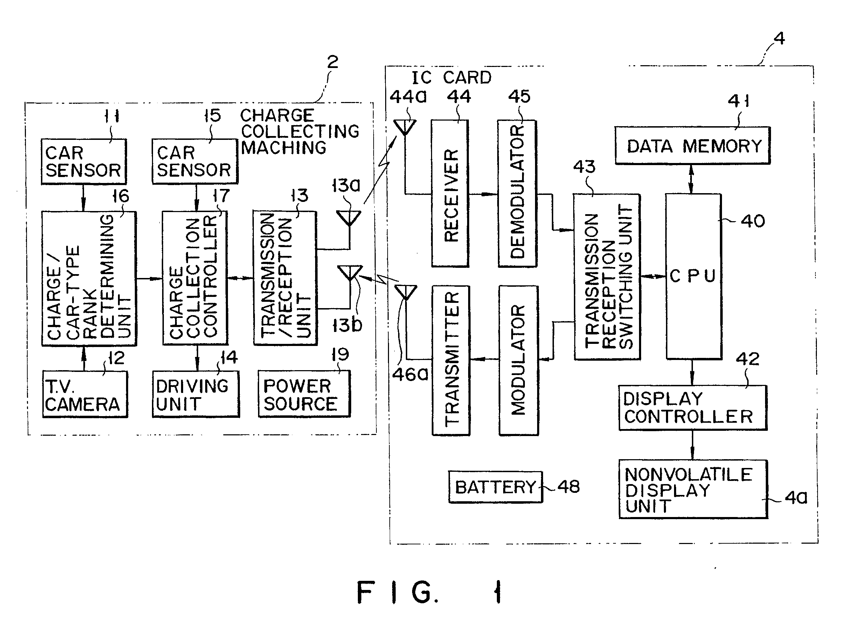

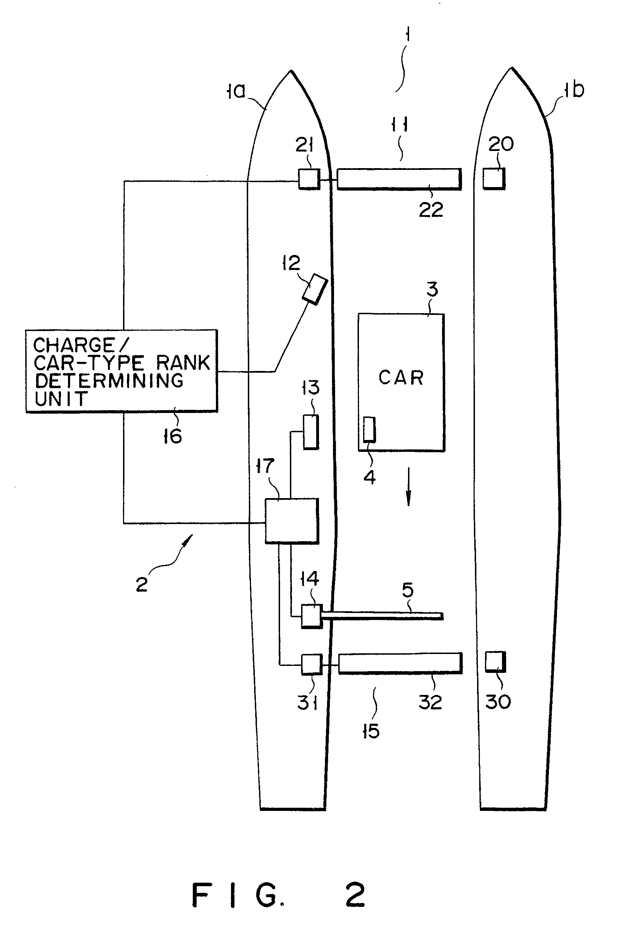

Figs. 1 and 2 show an example of the construction of a card treating system (information processing device) such as a charge or toll collecting system in a toll road to which an IC card having a wireless information transmission function as a portable type information storing medium according to this invention may be applied. That is, a charge collecting machine 2 installed in an charge collecting lane 1 of the toll road defined by curbs 1a and 1b is used to automatically collect a corresponding amount of charge by use of an IC card (portable type information storing medium) 4 of the driver of a car 3 entering the lane 1 in a direction indicated by an arrow and then permit the car 3 to pass a gate 5.

The charge collecting machine 2 includes a car sensor 11 for sensing the height and the number of wheel axles of the car 3 entering the charge collecting lane 1, a TV camera 12 installed on the succeeding stage of the car sensor 11 to read the car-type number of the registered car number plate (number plate) of the car 3 entering the charge collecting lane 1, a transmission/reception unit 13 for effecting a wireless transmission/reception operation performed by, for example, radio waves with respect to a reception unit 44 or transmission unit 46 provided in the IC card 4 held by a driver of the car 3 entering the charge collecting lane 1 via antennas 13a, 13b, 44a and 46a as will be described later, a driving unit 14 for driving the gate 5 to permit the car 3 to pass the charge collecting lane 1, a car sensor 15 for sensing the car 3 passing the charge collecting lane 1, a charge/car-type rank determining unit 16 for determining the charge/car-type rank (for example, large size, normal size and small size) of the car 3 entering the charge collecting lane 1 according to a sensing signal from the car sensor 11 and the car-type number read by the TV camera 12, and a charge collection controlling unit 17 constituted by a CPU for subtracting a charge corresponding to the charge/car-type rank determined by the charge/car-type determining unit 16 from the balance stored in the IC card 4 and supplied therefrom via the transmission/reception unit 13 and outputting the result of subtraction as the new balance to the IC card 4 via the transmission/reception unit 13.

The car sensor 11 includes a lamp 20 and a photoelectric sensor 21 which are mounted on both sides of the charge collecting lane 1 to sense the height of the car 3 by use of the photoelectric conversion effect and an axle sensing board 22 including a lead cell for outputting a sensing signal when it is stepped by the car 3 to detect the number of wheel axles of the car.

The car sensor 15 includes a lamp 30 and a photoelectric sensor 31 which are mounted on both sides of the charge collecting lane 1 to sense the car 3 by use of the photoelectric conversion effect and an axle sensing board 32 including a lead cell for outputting a sensing signal when it is stepped by the car 3 to detect the number of wheel axles of the car.

The charge collection controlling unit 17 converts a balance data request signal into radio waves and periodically transmits the radio waves via the transmission/reception unit 13 when the charge/car-type rank determination result from the charge/car-type rank determining unit 16 is received or when the car 3 is detected by the car sensor 11.

Data can be transferred between the IC card 4 and the charge collection machine 2 by use of radio waves with the IC card and the charge collection machine kept separated. The IC card 4 reads the balance data stored in a data memory 41 to be described later according to the balance output request signal from the charge collection machine 2 and outputs the balance data to the charge collection machine 2 by wireless or by use of radio waves, light, magnetic energy or the like.

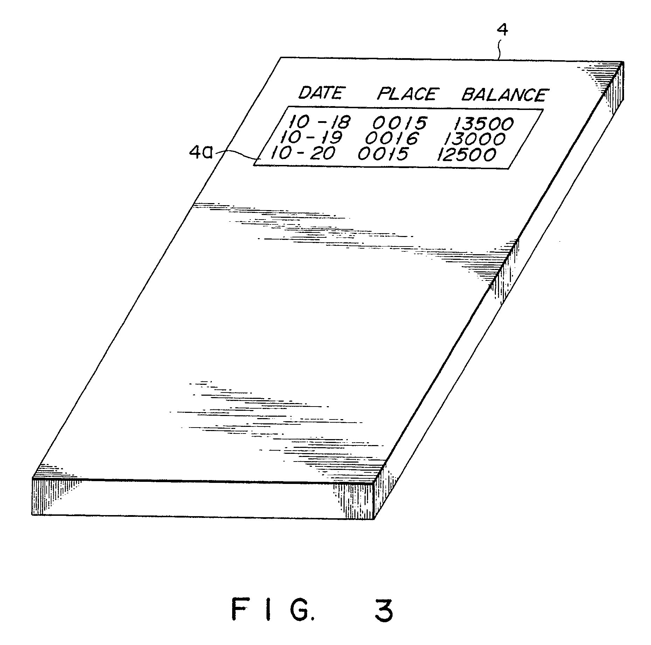

As shown in Fig. 3, a nonvolatile display unit 4a for displaying the contents of application such as the data month-day, place and balance in each of the last three applications stored in the data memory 41 to be described later is mounted on the surface of the IC card 4. The nonvolatile display unit 4a is constituted by an ECD (electrochromic device).

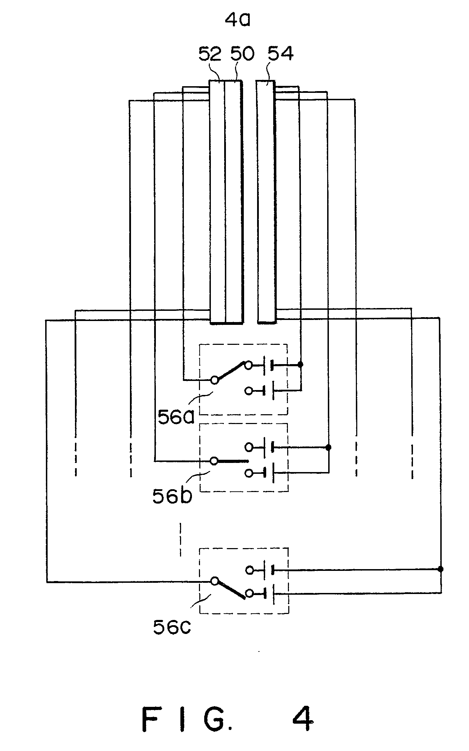

The ECD is an element of which the coloring or decoloring phenomenon is caused by electrochemical action when an electric field is applied on transparent electrodes thereof. An electrochromic member 50 used for the ECD as shown in Fig. 4 is of solid type utilizing a $WO_3$ film which emits blue light or of liquid type having liquid such as viologen for emitting red purple light liquid-tightly contained in a space defined by two electrodes. Viologen is a kind of organic electrochromic material and is a heterocyclic compound or the derivative thereof. The ECD uses an ITO (indium-tin-oxide) film of low resistance, highly responsive $WO_3$ film, $MoO_3$ film, Au film or the like as a front electrode 52 and uses Ag, C, Fe, Ni, $Sb_2O_5$ or the like which has a good printing property and high conductivity as an opposite electrode 54. The front electrode 52 and opposite electrode 54 receive electricity from power sources 56a, 56b, ... 56n to apply an electric field or counter-electric field to a selected portion of the electrochromic member 50 to repeatedly exhibit the coloring or de-coloring phenomenon.

The front electrode 52 and opposite electrode 54 are divided into segments and part of the electrochromic member 50 can be selectively colored by selectively applying an electric field to the segments of the front electrode 52 and opposite electrode 54 by the power sources 56a ... 56n. The electrochromic member 50 which is once applied with the electric field and is colored can maintain the colored state for several days to several months after application of the electric field is interrupted. Further, the colored electrochromic member 50 can be de-colored by generating a counter-electric field opposite to the electric field applied to the electrochromic member 50 for coloring between the front electrode 52 and opposite electrode 54 which are divided into the segments for displaying characters at the display unit 4a.

Thus, parts of the electrochromic member 50 can be selectively colored or de-colored to display characters or images, and the display can be maintained for several days to several months even if the applied electric field is removed. In a case where the ECD is used for the IC card 4 constituted by electronic parts and the like, the characters or images displayed on the ECD can be maintained even if the internal electronic parts of the IC card 4 are electrically damaged.

The nonvolatile display unit 4a displays the contents of last three applications (history of application) by use of numerals below the respective items "date", "place" and "balance" which are previously printed. In this case, the content of the newest application is displayed on the lowest row, and when the card 4 is newly applied, the content of the application at this time is displayed on the lowest row and the contents of the first and second preceding applications are respectively displayed on the second and third rows from the bottom. The nonvolatile display unit 4a can hold the display contents with no electric power because of its property, and even if the IC card 4 is bent or subjected to a mechanical shock or the battery cell 48 is used up to cause malfunction inside the IC card 4 (for example, a problem that the balance data of the data memory cannot be read out), the balance data which is necessary for re-issue of a new IC card can be read (checked for confirmation) if the display unit itself is not mechanically broken, thus permitting the new IC card to be promptly re-issued.

Further, as shown in Fig. 1, the internal portion of the IC card 4 is constructed by a control unit (CPU, information controlling means) 40, a data memory 41 constituted by an EEPROM for storing a control program, previously set payable amount, balance and the contents of application such as date, place and balance in each application, a display controlling unit 42 for applying an electric field to the nonvolatile display unit 4a to color the same and applying a counter-electric field to remove the color, a transmission/reception switching unit 43, a reception unit 44 for receiving a balance data request signal from the transmission/reception unit 13 of the charge collecting machine 2 via a receiving antenna 44a, a demodulator 45 for demodulating a signal from the reception unit 44, a transmission unit 46 for converting balance data from a modulator 47 into radio waves and transmitting the radio waves to the transmission/reception unit 13 of the charge collecting machine 2 via a transmitting antenna 46a, the modulator 47 for modulating the balance data supplied from the CPU 40 via the transmission/reception switching unit 43, and a battery 48 for supplying a power source voltage to respective elements in the card 4. The above elements are constituted by an IC chip and formed on one substrate. For example, a communication between the transmission/reception unit 13 and the transmission unit 46 and reception unit 44 of the IC card 4 is effected based on the FSK system, and in this case, pseudomicrowaves of 2.45 GHz may be used as a data carrier wave. Alternatively, medium waves of several hundreds may be used.

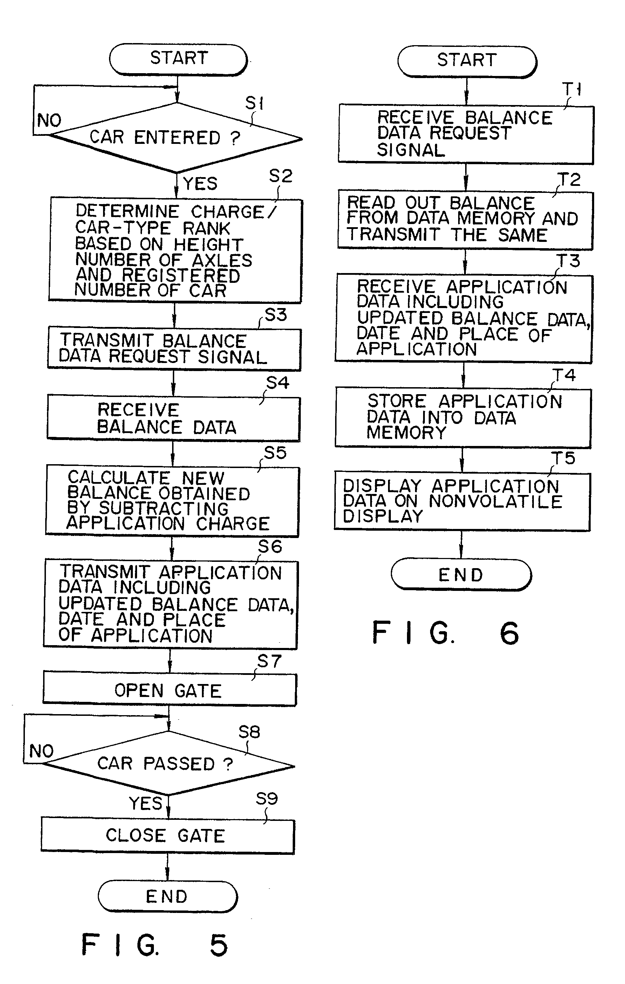

Next, the operation of the above construction is explained with reference to the flowchart shown in Figs. 5 and 6. When the car 3 enters the charge collection lane 1 and passes the car sensor 11 of the charge collecting machine 2, YES is obtained at step S1 in Fig. 5. Then, the height and the number of wheel axles of the car 3 are detected by means of the photoelectric sensor 21 facing a lamp 20 of the car sensor 11 and the axle sensing board 22 using an electrical switch and output to the charge/car-type rank determining unit 16 at step S2. Further, the operation of the TV camera 12 is started in response to detection of the entering car 3 by the car sensor 11. The car-type number of the registered car-type number plate (number plate) of the entering car 3 is read by the TV camera 12, and the result of the reading is output to the charge/car-type rank determining unit 16. As a result, the charge/car-type rank of the passing car 3 is determined by the charge/car-type rank determining unit 16 according to the height, the number of axles and the car-type number and is output to the charge collection controlling unit 17.

In step S3, the charge collection controlling unit 17 transmits the balance data request signal waves via the transmission/reception unit 13 when the determination result of the charge/car-type rank is supplied from the charge/car-type rank determining unit 16 or when entry of the car 3 is detected by the car sensor 11.

Then, when the car 3 is approaching the antennas 13a and 13b of the transmission/reception unit 13, that is, when the IC card 4 held by the driver of the car 3 is approaching the transmission/reception unit 13, the balance data request signal waves from the transmission/reception unit 13 are received at step T1 in Fig. 6 by the reception unit 44 of the IC card 4 via the antennas 13a and 44a. The balance data request signal waves received by the reception unit 44 are converted into an electrical signal which is in turn supplied to the CPU 40 via the transmission/reception switching unit 43 after being demodulated by the demodulator 45. The CPU 40 reads out the newest balance data stored in the data memory 11 and outputs the same to the modulator 47 via the transmission/reception switching unit 43 at step T2 of Fig. 6. The balance data modulated by the modulator 47 is converted into radio waves by the transmission unit 46 and then transmitted to the transmission/reception unit 13 at step S4.

Waves of the balance data received by the transmission/reception unit 13 are converted into an electrical signal and then output to the charge collection controlling unit 17. A new balance obtained by subtracting the charge corresponding to the charge/cartype rank from the balance data, that is, updated balance data is derived by the charge collection controlling unit 17 at step S5. The updated balance data, and data of date and place of application are output as application data to the transmission/reception unit 13 by means of the charge collection controlling unit 17 at steps S6 and T3. As a result, the application data is converted into radio waves by the transmission/reception unit 13 and then transmitted to the receiving unit 44.

The radio waves of the application data received by the receiving unit 44 are converted into an electrical signal which is in turn output to the CPU 40 via the transmission/reception switching unit 43 after being demodulated by the demodulator 45. The CPU 40 stores application data, that is, updated balance data, and data of date and place of the application into the data memory 41 at step T4. Further, the CPU 40 outputs the application data to the display control unit 42. Then, the display control unit 42 causes the contents of the newest application, that is, the date, place and balance to be displayed on the lowest row of the nonvolatile display unit 4a at step T5. At this time, the contents of the first and second preceding applications are respectively displayed on the second and third rows from the bottom. After this, the CPU 40 outputs completion data to the modulator 47 via the transmission/reception switching unit 43. After being modulated by the modulator 47, the completion data is converted into radio waves by the transmission unit 46 and then transmitted to the transmission/reception unit 13.

The radio waves of the completion data received by the transmission/reception unit 13 are converted into an electrical signal and then output to the charge collection controlling unit 17. When receiving the completion data from the IC card 4, the charge collection controlling unit 17 drives the driving unit 14 to open the gate 5 at step S7. When the gate 5 is opened, the car 3 is permitted to pass. When the car sensor 15 detects that the car 3 has passed at step S8, the driving unit 14 is driven to close the gate 5 at step S9.

When the charge collection control unit 17 detects that the balance from the IC card 4 is insufficient for the payment, it suggests by use of another display unit (not shown) that another IC card should be presented, or suggests that cash should be put into a cash collecting machine (not shown).

As described above, the newest balance data which is stored in the data memory of the IC card is kept displayed on the nonvolatile display unit, and therefore even if the IC card is bent or subjected to a mechanical shock or the battery cell is used up to cause malfunction inside the IC card (for example, a problem that the balance data of the data memory cannot be read out), the balance data which is necessary for re-issue can be read (confirmed) if the display unit itself is not mechanically broken, thus permitting an IC card to be promptly re-issued.

In the case of an IC card having no nonvolatile display unit, it is necessary to give an identification number to the IC card and the specification of application of the IC card must be collectively stored and controlled for data backup in a control center. When a large number of such IC cards are issued, it becomes difficult to attain the data backup. However, in this invention, no such problem occurs.

In the above embodiment, the application charge is constant, but this invention is not limited to this case and can be applied to a case when the application charge is determined according to the traveling distance of the toll road. In this case, pass information is stored into the data memory of the IC card at the entrance by use of a wireless function, a toll is calculated based on exit information obtained at the exit and the pass information, and then the toll is subtracted from the balance stored in the IC card.

Further, in the above embodiment, the IC card is not connected to the charge collecting machine when it is used. However, this invention is not limited to this case, and can be applied to a case where the IC card is connected to the charge collecting machine via a connector or the like to transfer data between the IC card and the charge collecting machine.

The IC card is used as the portable type storing medium, but the storing medium is not limited to a cardlike medium, but can be formed in the form of tag, block or pencil.

Further, the portable type storing medium may be an IC card having a keyboard, display and the like mounted thereon.

This invention is applied to the charge collecting machine of the toll road by use of the wireless function of the IC card, but this invention is not limited to this case and can be applied to the automatic examination of tickets of the railroad, for example.

As described above, according to this invention, a portable type information storing medium and an information processing device are provided which may permit the stored contents of the information storing means to be confirmed even when the stored contents of the information storing means cannot be read out.

## Claims

1. A portable type information storing device characterized by comprising:
information storing means (41) for storing information;
information control means (40) for effecting a read/write operation with respect to said information storing means (41); and
nonvolatile display means (4a) for displaying information stored in said information storing means (41) by means of said information control means (40).

2. A portable type information storing device of claim 1, characterized in that said nonvolatile display means (4a) displays said information visibly in a nonvolatile fashion.

3. A portable type information storing device of claim 1, characterized in that said nonvolatile display means (4a) comprises an electrochromic device (50).

4. An information processing system, characterized by comprising:
means (13) for receiving information transmitted from a portable type information storing device (4) having a nonvolatile display unit (4a) for displaying said information;
means (17) for processing said information received by said receiving means in a predetermined operation process; and
means (13, 13a) for transmitting said information processed by said processing means to said portable type information storing device.

5. An information processing system of claim 4, characterized in that said information received by said receiving means (13) is transmitted via a wireless transmission path (13a, 44a).

6. An information processing system of claim 4, characterized in that said information received by said receiving means (13) and transmitted by said transmitting means (16) is received and transmitted via wireless transmission path (13a, 44a).

7. An information processing device to be used in association with a portable type information storing device having a nonvolatile display unit for receiving information and displaying the received information, characterized by comprising:
signal processing unit (17) for effecting a predetermined operation process and transmitting resultant information derived based on the result of the operation process to said portable type information storing device (4), so as to display, in a nonvolatile fashion, the resultant information on the nonvolatile display unit (4a).

FIG. 1

F I G. 2

DATE    PLACE    BALANCE

| 10 - 18 | 0015 | 13500 |
| 10 - 19 | 0016 | 13000 |
| 10 - 20 | 0015 | 12500 |

F I G.    3

4a

52 50 54

56a

56b

56c

# F I G. 4

START

NO ── CAR ENTERED ? ── S1

YES ── S2

DETERMINE CHARGE/
CAR-TYPE RANK
BASED ON HEIGHT
NUMBER OF AXLES
AND REGISTERED
NUMBER OF CAR

S3

TRANSMIT BALANCE
DATA REQUEST SIGNAL

S4

RECEIVE
BALANCE DATA

S5

CALCULATE NEW
BALANCE OBTAINED
BY SUBTRACTING
APPLICATION CHARGE

S6

TRANSMIT APPLICATION
DATA INCLUDING
UPDATED BALANCE DATA,
DATE AND PLACE
OF APPLICATION

S7

OPEN GATE

NO ── CAR PASSED ? ── S8

YES ── S9

CLOSE GATE

END

FIG. 5

---

START

T1

RECEIVE BALANCE
DATA REQUEST
SIGNAL

T2

READ OUT BALANCE
FROM DATA MEMORY AND
TRANSMIT THE SAME

T3

RECEIVE APPLICATION
DATA INCLUDING
UPDATED BALANCE DATA,
DATE AND PLACE OF
APPLICATION

T4

STORE APPLICATION
DATA INTO DATA
MEMORY

T5

DISPLAY APPLICATION
DATA ON NONVOLATILE
DISPLAY

END

FIG. 6

**European Patent Office**

**Application Number**

**EP 90 12 0926**

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR-A-2 624 677 (SOCIETE DE FABRICATION D'INSTRUMENTS DE MESURE) <br> * abstract; figures 1,2,4a-c * | 1,4-7 | G 07 C 9/00 <br> G 06 K 7/10 |
| A | FR-A-2 604 808 (G. BAZIN) <br> * abstract; figure 1 * | 1,4-7 | |
| A | FR-A-2 474 204 (TRANSAC) <br> * claim 1 * | 1,4-7 | |
| A | GB-A-2 164 466 (NATIONAL RESEARCH DEVELOPMENT CORP.) <br> * abstract; figures 1-5 * | 2,3 | |

|  | TECHNICAL FIELDS SEARCHED (Int. Cl.5) |
|---|---|
| | G 06 K <br> G 07 C |

The present search report has been drawn up for all claims

| Place of search | Date of completion of search | Examiner |
|---|---|---|
| Berlin | 24 January 91 | ZOPF K |